(19) Europäisches Patentamt
European Patent Office
Office européen des brevets

(11) **EP 4 461 639 A1**

(12) **EUROPEAN PATENT APPLICATION**

(43) Date of publication:
**13.11.2024 Bulletin 2024/46**

(21) Application number: **24169124.5**

(22) Date of filing: **09.04.2024**

(51) International Patent Classification (IPC):
**B64C 11/30** (2006.01)

(52) Cooperative Patent Classification (CPC):
**B64C 11/305**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 US 202363501110 P
14.02.2024 US 202418441156**

(71) Applicant: **Pipistrel D.O.O.
5270 Ajdovscina (SI)**

(72) Inventor: **Matko, Drago
5270 Ajdov cina (SI)**

(74) Representative: **Glück Kritzenberger
Patentanwälte PartGmbB
Franz-Mayer-Str. 16a
93053 Regensburg (DE)**

(54) **PEAK EFFICIENCY PROPELLER CONTROL**

(57)   A method for providing peak efficiency propeller control includes determining an optimal propeller blade angle via a control system having settings and readings including advance ratio, propeller RPM, and electric motor torque. If any limits, such as maximum propeller RPM, allowable blade angle, or motor torque are violated, then a non-optimal blade angle may be found which does not violate any of the limits. The controller connects to sensors to measure the speed and altitude of an aircraft, and using advance ratio, is able to determine thrust and power contours for a blade-angle domain such that the optimum blade angle is determined in real-time for a wide range of flight conditions.

**FIG. 1**

EP 4 461 639 A1

## Description

## BACKGROUND OF THE INVENTION

### 1. Field

The disclosed embodiments relate generally to the field of propeller control on aircraft. More specifically, the disclosed embodiments relate to the process of optimizing propeller performance and efficiency using a control system.

### 2. Description of the Related Art

It is known to use propeller control to improve efficiency of a vessel. For example, U.S. Patent No. 8,315,750 to Blanke et al. describes a method for increasing propulsion efficiency of a vessel by controlling a propeller shaft speed using a computed optimal propeller shaft speed with the vessel comprising a propeller driven by an engine and a controller for controlling the propeller shaft speed.

Furthermore, it is also known for a control system to monitor airspeed and atmospheric density. For example, U.S. Patent No. 9,180,976 to Kobayashi et al. describes an electric propulsion system control apparatus that drives a propulsion propeller to rotate, and detectors which detect current and rotation speed of the motor while also having a processor equipped with a driving force calculation unit that estimates torque of the motor from the current detected by a current detector.

Other control systems exist on vessels to adapt the vessel's propulsion system to rapidly changing variable conditions. For example, U.S. Patent Application Publication No. 2010/0274420 to Veit et al. describes a method of controlling a propulsion system of a vessel independently adjusting the engine and propeller settings to respond to real-time vessel operating data.

Additionally, the desired propeller speed can be obtained by adjusting the blade angles of the propeller. For example, U.S. Patent Application Publication No. 2021/0180525 to Meunier et al. describes a method for governing the speed of a propeller-based engine in a gas-powered aircraft controlling the blade angle for the propeller of the engine. The desired blade angle is determined from a difference between a reference propeller speed and an actual propeller speed by referencing a plurality of blade angle values in a lookup table as a function of the engine or other aircraft parameter.

## SUMMARY

In embodiments, the techniques described herein relate to a method (300; 400) for providing peak efficiency propeller (130) control, the method (300; 400) including: determining an advance ratio based on a true airspeed, a diameter, and a propeller (130) efficiency; determining an optimal blade angle of a propeller (130) for the propeller (130) to operate at a maximum efficiency based on a required thrust and the advance ratio; determining whether the optimal blade angle violates limits of blade angle, a motor (135) or a propeller (130) RPM, a motor (135) power limit, or a motor (135) or propeller (130) torque limit; when the optimal blade angle violates any one of the limits, determining a non-optimal blade angle to achieve a maximum available thrust such that the non-optimal blade angle does not violate any one of the limits, and transmitting the non-optimal blade angle to an actuator (120) configured to physically adjust the blade angle of a propeller (130); and when the optimal blade angle does not violate any one of the limits, transmitting the optimal blade angle to the actuator (120) configured to physically adjust the blade angle of the propeller (130).

In some embodiments, the techniques described herein relate to a method (300; 400) wherein the required thrust is determined based on a throttle setting and is calculated as a fraction of the maximum available thrust.

In some embodiments, the techniques described herein relate to a method (300; 400) wherein a thrust contour in an advance-blade angle plane is calculated based on the altitude, true air speed, and the required thrust.

In some embodiments, the techniques described herein relate to a method (300; 400) wherein an optimal thrust contour in the advance-blade angle plane is calculated based on a range of thrust levels, the optimal blade angle, and advance ratio such that the propeller (130) operates at a maximum efficiency.

In some embodiments, the techniques described herein relate to a method (300; 400) including an RPM feedback loop wherein the RPM feedback loop includes an RPM controller (112) that adjusts RPM of the propeller (130) by adjusting the blade angle of the propeller (130).

In some embodiments, the techniques described herein relate to a method (300; 400) including a torque feedback loop wherein the torque feedback loop includes a torque controller (111) that adjusts an electric propeller (130) motor based on a required torque.

In some embodiments, the techniques described herein relate to a method (300; 400) wherein the optimal blade angle is determined by an optimal point in the advance-blade angle plane wherein the optimal point is located where a thrust contour of the required thrust intersects the optimal thrust contour and is within the limits of blade angle, propeller (130) and electric motor (135) RPM, power, and torque.

In some embodiments, the techniques described herein relate to a method (300; 400) wherein the non-optimal blade angle is determined by a non-optimal point when the optimal point violates any one of the limits of blade angle, propeller (130) and electric motor (135) RPM, power, and torque.

In some embodiments, the techniques described herein relate to a method (300; 400) wherein the non-optimal point is located within the limits of blade angle, propeller (130) and electric motor (135) RPM, power, and torque, and nearest where the thrust contour of the required thrust intersects the optimal thrust contour.

In some embodiments, the techniques described herein relate to a method (300; 400) including determining the optimal blade angle for the propeller (130) to operate at the maximum efficiency based on a power demand and the advance ratio.

In some embodiments, the techniques described herein relate to a method (300; 400) including determining the non-optimal blade angle to achieve a maximum available power such that the non-optimal blade angle does not violate any one of the limits.

In some embodiments, the techniques described herein relate to a method (300; 400) wherein the power demand is determined based on a throttle setting and is calculated as a fraction of the maximum available power.

In some embodiments, the techniques described herein relate to a method (300; 400) wherein a power contour in an advance-blade angle plane is calculated based on the altitude, true air speed, and the power demand.

In some embodiments, the techniques described herein relate to a method (300; 400) wherein an optimal power contour in the advance-blade angle plane is calculated based on a range of power levels, the optimal blade angle, and advance ratio for the propeller (130) to operate at the maximum efficiency.

In some embodiments, the techniques described herein relate to a method (300; 400) wherein the optimal blade angle is determined by an optimal point in the advance-blade angle plane, the optimal point being located where a power contour of the power demand intersects the optimal power contour and is within the limits of blade angle, propeller (130) and electric motor (135) RPM, thrust, and torque.

## BRIEF DESCRIPTION OF SEVERAL VIEWS OF THE DRAWINGS

Illustrative embodiments are described in detail below with reference to the attached drawing figures, which are incorporated by reference herein and wherein:

FIG. 1 is a block diagram showing a method detailing the way data is transferred between elements in embodiments;
FIG. 2 is a process flow diagram showing a method for blade angle adjustment to provide peak efficiency propeller control, in an embodiment;
FIG. 3 is an embodiment of a process flow diagram for obtaining a blade angle input to provide peak efficiency propeller control;
FIG. 4 is another embodiment of a process flow diagram for obtaining a blade angle input to provide peak efficiency propeller control;
FIG. 5A, 5B, and 5C show exemplary thrust contours for a range of blade angles and advance ratios; and
FIG. 6A and 6B show exemplary power contours for a range of blade angles and advance ratios.

The drawing figures do not limit the invention to the specific embodiments disclosed and described herein. The drawings are not necessarily to scale, emphasis instead being placed upon clearly illustrating the principles of the invention.

## DETAILED DESCRIPTION

The following detailed description references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the invention. The following detailed description is, therefore, not to be taken in a limiting sense. The scope of the invention is defined only by the appended claims, along with the full scope of equivalents to which such claims are entitled.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the technology can include a variety of combinations and/or integrations of the embodiments described herein.

Embodiments disclosed herein provide a control system and method for an aircraft equipped with an electric motor to achieve optimal efficiency from its propeller. Generally, propeller efficiency may be described as the ratio of propulsive power output to shaft power input. Propeller speed (e.g., rotations per minute (RPM)) and/or torque is typically constant for combustion powered aircraft to achieve efficient power output from the combustion engine. Once the RPM of the propeller is set to operate at peak efficiency of the combustion engine, the blade angle of the propeller blades is controlled to allow the propeller to rotate at the necessary RPM to meet a thrust demand. Due to the dependency of the RPM on the efficiency of the combustion engine, the propeller speed is constrained and may not be capable of operating at its peak efficiency. A propeller not operating at its peak efficiency is suboptimal and can increase costs of aircraft operation.

Alternatively, when using an electric propulsion system, as proposed in disclosed embodiments, efficiency of the electric motor is practically independent of propeller speed. Since there is no combustion engine efficiency equivalent with an electric motor, the blade angle of the propeller may be adjusted to maximize its efficiency. Therefore, it may be advantageous to operate with a blade angle that can be continuously adjusted to changing RPM, altitude (air density), and airspeed. The blade angle needed to allow the propeller to operate at peak efficiency can be calculated using power and thrust coefficients as a function of $J$ (advance ratio, described below) and a measured RPM, altitude, and airspeed. The reference blade, in embodiments, is provided as a feedback angle for setting the measured propeller blade angle to its desired value.

Previous methods involving usage of a combustion engine include using a plurality of predefined operating conditions that can be used as a look-up table to determine the appropriate blade angle needed for optimal efficiency under open loop control without real-time feedback. Drawbacks of the previous methods include an inability to adjust to actual flight conditions such that onboard performance cannot be validated or tuned in real-time due to an absence of a feedback signal.

In disclosed embodiments, a method including a control system is presented which may continuously control the propeller blade angle and electric motor RPM so that maximum propeller efficiency is achieved. The controller is able to appropriately adjust propeller blade angle and electric motor RPM so that the propeller operates with increased efficiency. Using an algorithm calculating desired blade angle for maximum efficiency and electric motor RPM, the controller outputs commands to adjust actuators or other systems to control propeller blade angle. The algorithm incorporates information such as the propeller diameter (D), the maximum power, torque, and RPM of the propeller. Thrust, power and torque are used as functions of advance ratio ($J$) and blade angle can be calculated based on altitude, RPM demand, and true air speed. Using known measurement instruments the current altitude and true air speed of the aircraft can be constantly monitored and supplied to the controller.

Thrust is calculated using $T = C_T \rho n^2 D^4$ with $C_T$ representing the thrust coefficient as a function of $J$ and propeller blade angle. Power is calculated using $P = C_P \rho n^3 D^5$ with $C_P$ representing the power coefficient.

$$Q = \frac{P}{2\pi n}$$

Torque is calculated using the above. The symbol $\rho$ represents air density and symbol $n$ represents rotation frequency in Hertz and is given by the equation $n =$ RPM/60. The advance ratio $J$ can be found using the

equation $J = \frac{v_{TAS}}{nD}$ with $v_{TAS}$ representing true airspeed. Advance ratio $J$ is also used in calculating the

propeller efficiency $\eta$ shown in the equation $\eta = J \frac{C_T}{C_P}$ with $C_P$ and $C_T$ representing the propeller data provided by the producer.

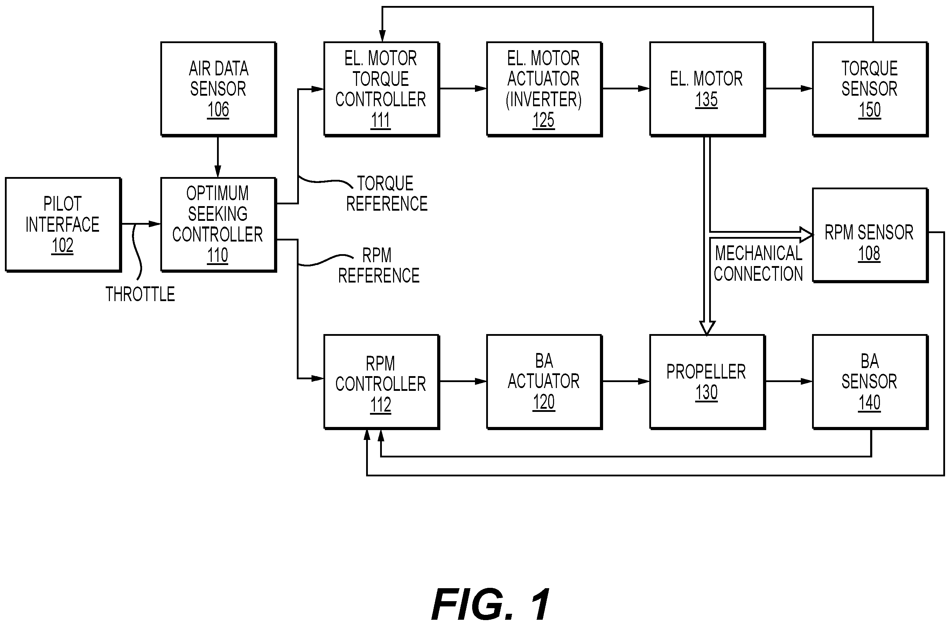

FIG. 1 is a block diagram representing a peak efficiency propeller control system 100. A pilot interface 102 receives input from a pilot which is provided to the controller 110. The input provided to the pilot interface 102 may include but is not limited to thrust demand from a throttle interface. Air data sensors 106 provide information regarding in-flight conditions (e.g., true airspeed, altitude, air density, etc.). Data from the pilot interface 102 and sensors 106 are transferred to the controller 110 in real-time or near real-time. The controller 110 may be configured as an optimum seeking controller that calculates optimal propeller performance parameters for maximal propeller efficiency, including but not limited to thrust, power, torque, RPM and propeller pitch (blade angle). Controller 110 may store additional information (e.g., as constants or lookup tables) used in calculations, such as thrust coefficient, power coefficient, propeller diameter (D), and the maximum power, torque, and RPM of the propeller, for example. The additional information may be previously obtained prior to an aircraft flight.

Data from controller 110 is transmitted to two feedback controllers, the electric motor torque feedback controller 111 and the RPM feedback controller 112. The electric motor torque feedback controller 111 controls the torque of the electric motor, which may influence the propeller. The RPM feedback controller 112 controls the speed of the propeller. The RPM feedback loop may be performed as a cascade of RPM control (outer loop) and blade angle control (inner loop). Both torque controller 111 and RPM controller 112 set the actual torque and RPM respectively to the desired values, provided by the controller 110. The closed feedback loop makes possible continuous adjustment of the motor (propeller) torque and RPM. The closed control loop controller may be a proportional-integral-derivative (PID) controller, for example. All signaling connections made between elements in system 100 may transfer data in a wired, wireless, or other manner capable of transferring data between system 100 elements. In embodiments, the blade angle can be set to its optimal value directly, without the RPM controller 112, and RPM is controlled with the electric motor torque feedback controller 111.

The feedback controllers' 111 and 112 output is fed to the actuators 125 and 120 respectively to achieve the desired torque and RPM respectively. The electric motor actuator 125, also called an inverter, provides appropriate voltage excitation for the electric motor which assures the required torque. The blade angle actuator 120 physically adjusts the blade angle (also called pitch) of the propeller which assures the required RPM. Actuator 120 may comprise of hydraulically powered actuators or electromechanical actuators for physically adjusting the angle of the propeller blades. The method or process employed to adjust the electric motor torque and angle of propeller blade or blades should not be considered limiting in the scope of the embodiments herein. In order to compute the optimal blade angle for aircraft performance, the controller 110 uses an optimum-seeking algorithm to calculate the electric motor torque, RPM and propeller blade angle based upon the given input from pilot interface 102, sensors 106, and other previously obtained information (e.g., thrust coefficient, power coefficient, propeller diameter $D$, and the maximum power, torque, and RPM of the propeller).

The electric motor 135 generates torque required by the controller 110 and based on the torque control loop (i.e., the torque feedback controller 111, the inverter 125, the electric motor 135 and the torque sensor 150). This establishes electric motor control, since the motor torque is proportional to the current, which can easily be measured by sensor 150. In embodiments the motor 135 is controlled using required RPM settings. The propeller 130 uses the torque delivered by the motor 135 to produce thrust. In steady state, the electric motor 135 torque equals the propeller torque. The blade angle of the propeller 130 is set to its optimal value which provides maximum propeller efficiency. In one embodiment, the blade angle setting is easily obtained by the RPM feedback loop, including the feedback RPM controller 112, the blade angle actuator 120, propeller 130, RPM sensor 108 and blade angle sensor 140. RPM adjustment made by adjusting propeller blade angle is an effective way of controlling the rotational speed of the propeller. It can be performed as a cascade control of the blade angle setting (inner loop) and RPM control (outer loop). In steady state, the required RPM ensures the optimal blade angle setting, calculated by the controller 110. In embodiments where RPM is controlled by the electric motor 135, the blade angle is set according to the reference provided by the controller 110.

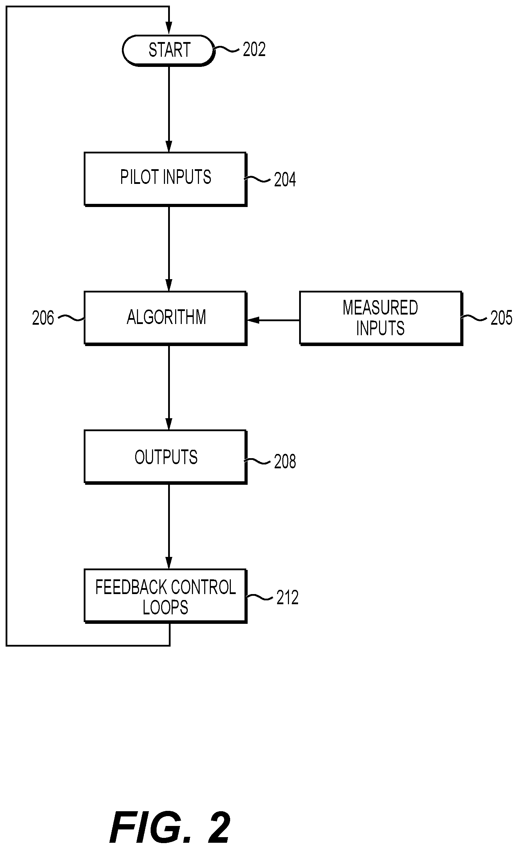

FIG. 2 is a flow diagram for a blade angle adjustment method 200 used to provide peak efficiency propeller control. Method 200 is performed using system 100 described above.

In a step 202, the process begins.

In a step 204, pilot inputs are provided to the controller 110. Pilot inputs 102 include, for example, thrust demand based on throttle position. For example, a sensor may be used to determine a throttle angle which is provided to controller 110 to determine thrust demand. Alternatively, the throttle angle may be used by controller 110 to determine power demand.

In a step 205, measured inputs are provided to the controller 110. In an example of step 205, air data sensors 106 provide measured inputs to the controller 110. Examples of measured inputs include but are not limited to velocity (true airspeed), air density, etc. In some embodiments, an RPM sensor 108, a blade angle sensor 140, and a torque measurement from the sensor 150 are provided to the controller 110.

Continuing to step 206, the controller 110 uses an algorithm to determine outputs based on the inputs. In an example of step 206, the controller 110 uses a blade angle optimization algorithm, described below, to determine an optimal propeller blade angle, RPM, torque, power, etc., which is optimized for peak efficiency of the propeller. Additionally, the algorithm of step 206 may be configured to determine commands to cascaded control loops (e.g., torque and RPM control loop shown in FIG. 1) for adjusting propeller blade angle and RPM to optimal settings, which substantially optimize the propeller to operate at its peak performance.

In step 208, outputs of algorithm 206 are transmitted to cascaded control loops. In an example of step 208, outputs of algorithm 206 are transmitted from the controller 110 to torque feedback controller 111 configured to adjust the electric motor torque and RPM feedback controller 112 configured to adjust the RPM by appropriate propeller blade angle setting. The output data comprises a setpoint command configured to provide the optimal electric motor torque calculated via algorithm 206 and propeller RPM, set by the appropriate blade angle calculated via algorithm 206.

Step 212 includes feedback control loops, which in embodiments are the torque feedback loop and the RPM feedback loops (FIG. 1). In the torque feedback loop, the electric motor feedback torque controller 111 commands the inverter 125 to adjust the motor voltage. The electric motor 135 responds to the voltage with corresponding current, which is proportional to its torque. The current is measured by the current/torque sensor 150 and sent back to the torque controller 111 to close the feedback loop. In the RPM feedback loop, the RPM feedback controller 112 commands the blade angle actuator 120 to adjust the propeller blade angle. It may be performed as a cascade of RPM control (outer loop) and blade angle control (inner loop), as described above. The propeller responds to changing blade angle with changing RPM, which is measured by the RPM sensor 108 and sent back to the outer RPM controller 112 to close the feedback loop. In embodiments the blade angle can be set to its optimal value directly, without the RPM control and RPM is instead controlled via the electric motor control.

Following step 212, flight reading instruments will detect changes in aircraft flight dynamics caused from adjustments in the propeller blade angle. The method flow 200 is then repeated for providing continuous blade angle adjustment.

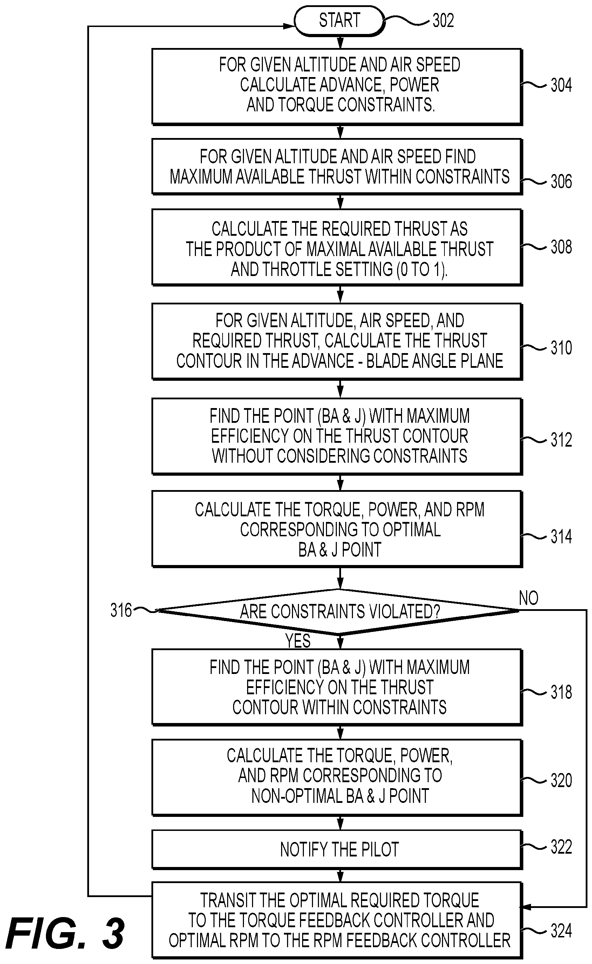

FIG. 3 is a flow diagram depicting an exemplary blade-angle optimization method 300. To find the optimal blade angle for an aircraft's current conditions, the algorithm 206 determines the optimal propeller blade angle and advance ratio $J$ as a function of altitude, air speed and thrust demand. From the optimal advance ratio and blade angle, optimal RPM and torque are calculated for a given airspeed and altitude.

In a step 302, the blade-angle optimization method 300 begins. In an example of step 302, controller 110 begins executing algorithm 206 as shown in FIG. 2.

Continuing to step 304, the constraints on advance ratio $J$ (corresponding to the RPM constraint), power and torque are calculated based on inputs provided by air data sensors 106, including altitude, true airspeed, and propeller diameter.

In step 306, the maximum available thrust within constraints is calculated.

In step 308, the required thrust as the fraction of the maximal available thrust and throttle setting (e.g., 0 to 1) is calculated.

In step 310 the thrust contour in the Advance - Blade angle plane is calculated based on air data sensor inputs 106 and required thrust.

In step 312, the point with maximum efficiency on the thrust contour in the Advance-blade angle plane ($BA$ & $J$) without constraints is calculated. For this point propeller blade angle, RPM and required torque for maximum efficiency are calculated for a given thrust demand. For example, using algorithm 206, the controller 110 determines optimal blade angle, based upon advance ratio $J$. In embodiments, torque demand, RPM demand or blade angle demand are calculated from thrust demand by controller 110, and algorithm 206. The algorithm 206 optimizes the RPM, torque demand and blade angle for a given thrust demand. In a preferred embodiment the torque demand is used for the electric motor control while the RPM demand is used for the cascade control of the blade angle. In another embodiment, the torque demand is used for the electric motor control and blade angle demand for the blade angle control loop. In yet another embodiment, the RPM demand is used for the electric motor control and blade angle demand for the blade angle control loop.

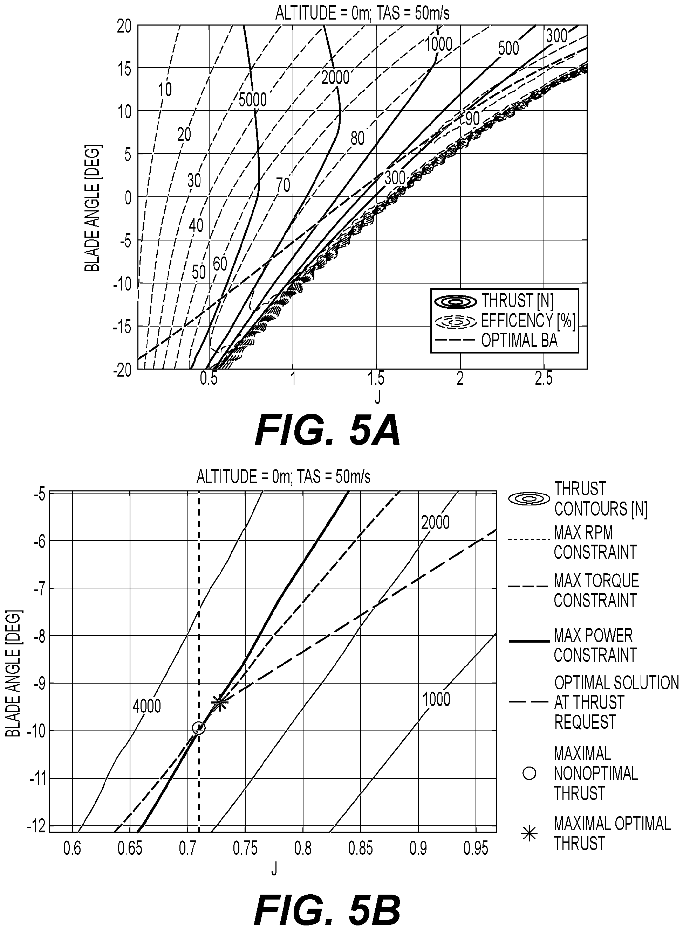

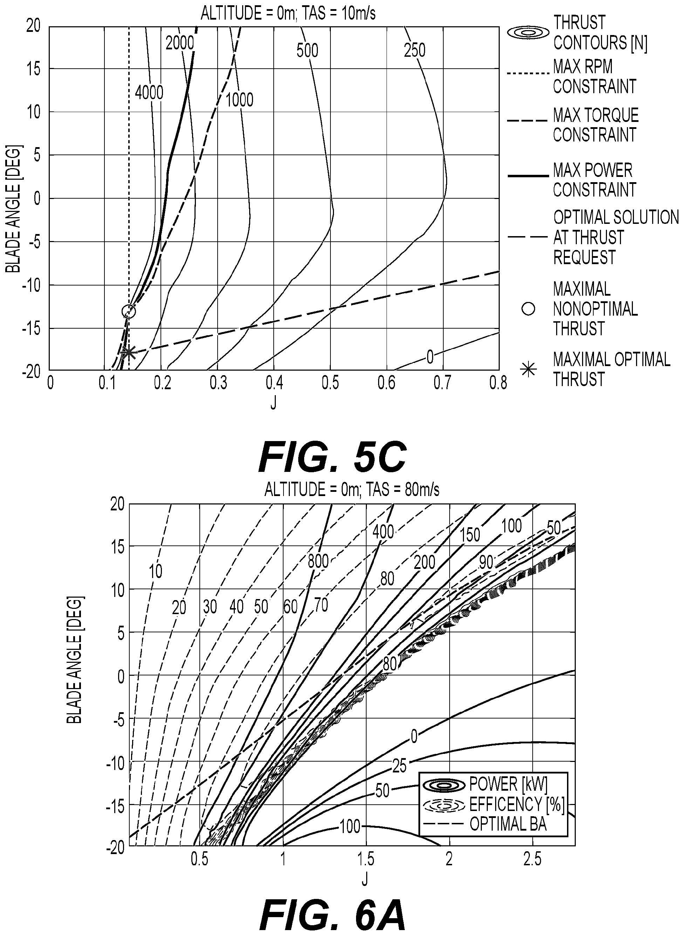

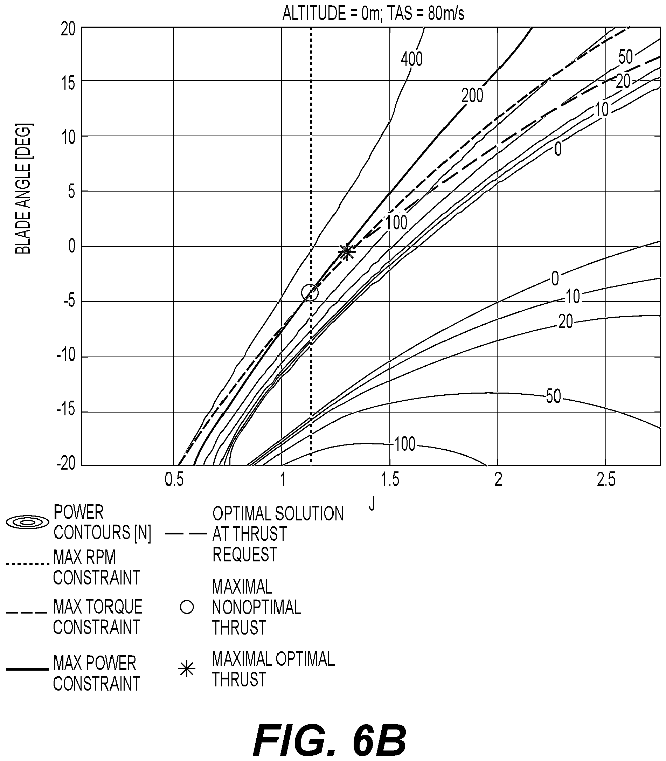

FIG. 5A shows a plot of thrust and efficiency contours as a function of propeller blade angle and advance ratio J. The thrust contours are plotted for the airspeed of 50 m/s. In FIG. 5A, FIG. 5B, FIG. 6A and FIG. 6B, the advance ratio $J$ is plotted on the x-axis while the blade angle is plotted on the y-axis. Thrust contour lines are shown for different thrust levels. Maximum efficiency is calculated for each thrust contour. The line with the label "OPTIMAL BA" in FIG. 5A depicts the maximum efficiency for various thrust demands. From FIG. 5A it may be seen that for a given amount of thrust, as the advance ratio $J$ increases, in general, the blade angle must also be increased to maintain that given amount of thrust. The optimal thrust contour line shows blade angle as a function of advance ratio $J$ across a range of thrust levels. Therefore, to meet a thrust demand requested from the pilot interface 102, the controller 110 uses algorithm 206 to determine the blade angle and advance ratio $J$ that will best provide optimal efficiency for a desired thrust at given altitude. For example, looking at FIG. 5A, where the contour level for a given thrust demand intersects the optimal thrust contour, the corresponding x-axis value is the optimal advance ratio $J$ and the corresponding y-axis value is the optimal blade angle. This intersection point is called optimal point in the advance - blade angle domain. Therefore, from the given advance ratio $J$ (which depends on the airspeed and on the propeller rotation frequency in Hertz: n = RPM/60), the required RPM demand can be obtained for a given airspeed. From the optimal blade angle, optimal advance ratio, propeller rotation frequency, air density and propeller diameter, the required torque demand is obtained. The required torque demand provides the reference for the electric motor torque controller 111 and the required RPM provides reference for the RPM controller 112. From the optimal blade angle, optimal advance ratio, propeller rotation frequency, air density and propeller diameter, the required power demand may also be obtained.

Returning to FIG. 3, in step 314 the torque, power and RPM for the optimal blade angle and advance ratio and given airspeed and altitude are calculated.

In a decision step 316, the algorithm 206 determines if the RPM, torque and power demands (corresponding to thrust demand), calculated in step 314, violate limits of propeller or electric motor RPM, power, or torque, and if the calculated blade angle for peak efficiency is within an allowable blade angle domain In embodiments, the allowable blade angle domain is determined by maximum and minimum physical limits of blade angle. If the RPM, power or torque demands violate any one of the RPM, power, and torque limits, then the process proceeds to step 318. In this case the required thrust cannot be achieved in the optimal mode. If the demanded RPM, power or torque as functions of advance ratio $J$ and propeller blade angle do not violate these limits, then the process proceeds to a step 324.

In step 318, the algorithm 206 determines a point in the advance-blade angle domain with maximum efficiency for the required thrust within the constraints of propeller and electric motor RPM, power, torque, and the allowable blade angle limits. FIG. 5B shows a plot of thrust contours as a function of propeller blade angle and advance ratio $J$ together with all constraints for zero altitude and airspeed of 50-m/s. In case of full throttle, the optimal point for maximal thrust in optimal mode is denoted by a star, and the advance - blade angle point for the required thrust (in not-optimal mode) with a circle. FIG. 5C shows the conditions for the airspeed of 10-m/s.

In step 320 the torque, power, and RPM for the non-optimal blade angle and advance ratio and given airspeed are calculated.

In step 322 the pilot is notified that the optimal propeller blade angle mode has been left. In an example of step 322, an announcement and/or a force feedback on the throttle is provided to notify the pilot that the optimal propeller blade angle mode has been left.

In step 324, the calculated torque and RPM values (either in step 314 or 320) are used by the controller 110 to determine commands for controlling the actuators 125 and 120 respectively to adjust the desired torque and RPM. The propeller blade angle is set by the RPM controller 112 and converges to the value calculated in step 312 or 318. The process 300 then returns to the start 302 to repeat the method 300 such that continuous electric motor torque, RPM, and blade angle adjustment are administered to maintain optimal efficiency during flight. In some embodiments, the electric motor is controlled by the value of RPM, calculated in step 314 or 320, and by the blade angle with its value calculated in step 312 or 318.

Another possible embodiment is to control the electric motor 135 by the value of torque, calculated in step 314 or 320, and blade angle with its value calculated in step 312 or 318.

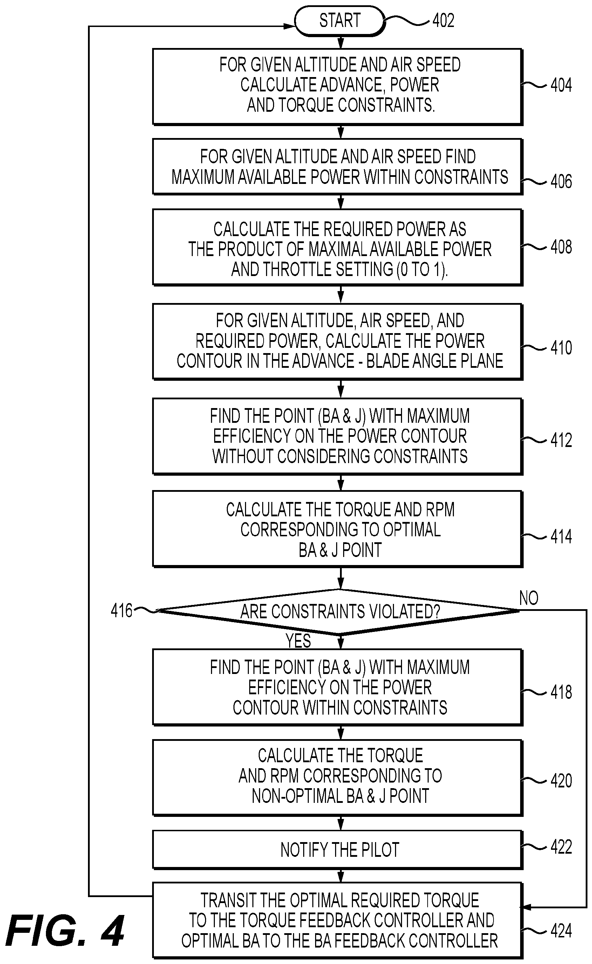

FIG. 4 is a flow diagram depicting an exemplary blade-angle optimization method 400. Method 400 is an alternative method to method 300 in which the optimal propeller blade angle is determined for power demand instead of thrust demand.

In a step 402, the blade-angle optimization method 400 begins. In an example of step 402, controller 110 begins executing algorithm 206 as shown in FIG. 2.

In step 404, the constraints on advance ratio $J$, power and torque are calculated based on inputs 102, including altitude, true airspeed, and propeller diameter.

In step 406, maximum available power is determined.

In step 408 the required power as the fraction of the maximal available power and throttle setting (e.g., 0 to 1) is calculated.

In step 410 the power contour in the advance - blade angle plane is calculated based on air data sensor inputs 106 and required power.

In step 412, the point with maximum efficiency on the power contour in the advance-blade angle plane ($BA$ & $J$) without constraints is calculated. For this point, propeller blade angle, RPM and required torque for maximum efficiency are calculated for a given power demand. For example, using algorithm 206, the controller 110 determines optimal blade angle, based upon advance ratio $J$. In embodiments, torque demand, RPM demand or blade angle demand are calculated from power demand by controller 110, and algorithm 206. The algorithm 206 optimizes the RPM, torque demand and blade angle for a given power demand. In preferred embodiment, the torque demand is used for the electric motor control while the RPM demand is used for the cascade control of the blade angle. Another embodiment uses the torque demand for the electric motor control and blade angle demand for the blade angle control loop. Another embodiment uses the RPM demand for the electric motor control and blade angle demand for the blade angle control loop.

FIG. 6A shows a plot of power and efficiency contours as a function of propeller blade angle and advance ratio J. The power contours are plotted for the airspeed of 80-m/s. Power contour lines are shown for different exemplary power levels. Maximum efficiency is calculated for each power contour. The thicker of the dashed lines in FIG. 6A depicts the maximum efficiency for various power demands. From FIG. 6A, it may be seen that for a given amount of power, as the advance ratio $J$ increases, in general, the blade angle must also be increased to maintain that given amount of power. The optimal power contour line shows blade angle as a function of advance ratio $J$ across a range of power levels. Therefore, to meet a power demand requested from the pilot interface 102, the controller 110 uses algorithm 206 to determine the blade angle and advance ratio $J$ that best provides optimal efficiency for a desired power at given altitude. For example, looking at FIG. 6A, where the contour level for a given power demand intersects the optimal power contour, the corresponding x-axis value is the optimal advance ratio $J$ and the corresponding y-axis value is the optimal blade angle. This intersection point is called optimal point in the advance - blade angle domain. Therefore, from the given advance ratio $J$ (which depends on the airspeed and on the propeller rotation frequency in Hertz: n = RPM/60) the required RPM demand may be obtained for a given airspeed. From the optimal blade angle, optimal advance ratio, propeller rotation frequency, air density and propeller diameter the required torque demand may be obtained. The required torque demand provides the reference for the electric motor torque controller 111 and the required RPM provides reference for the RPM controller 112.

Returning to FIG. 4, in step 414 the torque and RPM for the optimal blade angle and advance ratio and given airspeed and altitude are calculated.

In a decision step 416, the algorithm 206 determines if the RPM and torque demands (corresponding to power demand) calculated in step 414 violate limits of propeller or electric motor RPM or torque, and if the calculated blade angle for peak efficiency is within an allowable blade angle domain. The allowable blade angle domain is determined by maximum and minimum physical limits of blade angle. If the RPM or torque demands violate any one of the RPM and torque limits, then the process proceeds to step 418. In this case the required power cannot be achieved in the optimal mode. If the demanded RPM or torque as functions of advance ratio $J$ and propeller blade angle do not violate these limits, then the process proceeds to step 424.

In step 418, algorithm 206 determines the point in the advance-blade angle domain with maximum efficiency for the required power within the constraints of propeller and electric motor RPM, torque, and the allowable blade angle domain. FIG. 6B shows a plot of power contours as a function of propeller blade angle and advance ratio $J$ together with all constraints for zero altitude and airspeed of 80-m/s. In a case of full throttle, the optimal point for maximal power in optimal mode is denoted by a star, and the advance - blade angle point for the required power (in not-optimal mode) with a circle.

In step 420 the torque and RPM for the non-optimal blade angle and advance and given airspeed are calculated.

In step 422 the pilot is notified that the optimal propeller blade angle mode has been left. In an example of step 422, an announcement and/or a force feedback on the throttle may be used to notify the pilot that the optimal propeller blade angle mode has been left.

In step 424, the calculated optimal torque and RPM values are used by the controller 110 to determine commands for controlling the actuators 125 and 120 respectively to adjust the desired torque and RPM. The optimal propeller blade angle is set by the RPM controller 112 and in an ideal case converges to the optimal value calculated in the step 412 or 418. The process 400 then returns to the start 402 to repeat the method 400 such that continuous electric motor torque, RPM and blade angle adjustment are administered to maintain optimal efficiency during flight. In some embodiments, the electric motor 135 may be controlled by the optimal value of RPM, calculated in step 414 or 420. Blade angle may be controlled with its optimal value calculated in step 412 or 418, or the electric motor 135 controlled by the optimal value of torque, calculated in step 414 or 420 may be controlled.

These optimization calculations disclosed above in embodiments are performed with real time flight from pilot inputs 204 and measured inputs 205. The inputs are relayed to controller 110 for calculating optimal blade angles to be adjusted by systems or actuators on the aircraft.

Many different arrangements of the various components depicted, as well as components not shown, are possible without departing from the spirit and scope of what is claimed herein. Embodiments have been described with the intent to be illustrative rather than restrictive. Alternative embodiments will become apparent to those skilled in the art that do not depart from what is disclosed.

It will be understood that certain features and subcombinations are of utility and may be employed without reference to other features and subcombinations and are contemplated within the scope of the claims. Not all steps listed in the various figures need be carried out in the specific order described.

**Claims**

1. A method (300; 400) for providing peak efficiency propeller (130) control, the method (300; 400) comprising:

   determining an advance ratio based on a true airspeed, a diameter, and a propeller (130) efficiency;
   determining an optimal blade angle of a propeller (130) for the propeller (130) to operate at a maximum efficiency based on a required thrust and the advance ratio;
   determining whether the optimal blade angle violates limits of blade angle, a motor (135) or a propeller (130) RPM, a motor (135) power limit, or a motor (135) or propeller (130) torque limit;
   when the optimal blade angle violates any one of the limits, determining a non-optimal blade angle to achieve a maximum available thrust such that the non-optimal blade angle does not violate any one of the limits, and transmitting the non-optimal blade angle to an actuator (120) configured to physically adjust the blade angle of a propeller (130); and
   when the optimal blade angle does not violate any one of the limits, transmitting the optimal blade angle to the actuator (120) configured to physically adjust the blade angle of the propeller (130).

2. The method (300; 400) of claim 1 wherein the required thrust is determined based on a throttle setting and is calculated as a fraction of the maximum available thrust.

3. The method (300; 400) of claim 1 wherein a thrust contour in an advance-blade angle plane is calculated based on the altitude, true air speed, and the required thrust.

4. The method (300; 400) of claim 3 wherein an optimal thrust contour in the advance-blade angle plane is calculated based on a range of thrust levels, the optimal blade angle, and advance ratio such that the propeller (130) operates at a maximum efficiency.

5. The method (300; 400) of any of claims 1 to 4 comprising an RPM feedback loop wherein the RPM feedback loop includes an RPM controller (112) that adjusts RPM of the propeller (130) by adjusting the blade angle of the propeller (130).

6. The method (300; 400) of any of claims 1 to 5 comprising a torque feedback loop wherein the torque feedback loop includes a torque controller (111) that adjusts an electric propeller (130) motor based on a required torque.

7. The method (300; 400) of claim 4 wherein the optimal blade angle is determined by an optimal point in the advance-blade angle plane wherein the optimal point is located where a thrust contour of the required thrust intersects the optimal thrust contour and is within the limits of blade angle, propeller (130) and electric motor (135) RPM, power, and torque.

8. The method (300; 400) of claim 7 wherein the non-optimal blade angle is determined by a non-optimal point when the optimal point violates any one of the limits of blade angle, propeller (130) and electric motor (135) RPM, power, and torque.

9. The method (300; 400) of claim 8 wherein the non-optimal point is located within the limits of blade angle, propeller (130) and electric motor (135) RPM, power, and torque, and nearest where the thrust contour of the required thrust intersects the optimal thrust contour.

10. The method (300; 400) of any of claims 1 to 9 comprising determining the optimal blade angle for the propeller (130) to operate at the maximum efficiency based on a power demand and the advance ratio.

11. The method (300; 400) of claim 10 comprising determining the non-optimal blade angle to achieve a maximum available power such that the non-optimal blade angle does not violate any one of the limits.

12. The method (300; 400) of claim 10 or 11 wherein the power demand is determined based on a throttle setting and is calculated as a fraction of the maximum available power.

13. The method (300; 400) of any of claims 10 to 12 wherein a power contour in an advance-blade angle plane is calculated based on the altitude, true air speed, and the power demand.

14. The method (300; 400) of claim 13 wherein an optimal power contour in the advance-blade angle plane is calculated based on a range of power levels, the optimal blade angle, and advance ratio for the propeller (130) to operate at the maximum efficiency.

15. The method (300; 400) of claim 13 or 14 wherein the optimal blade angle is determined by an optimal point in the advance-blade angle plane, the optimal point being located where a power contour of the power demand intersects the optimal power contour and is within the limits of blade angle, propeller (130) and electric motor (135) RPM, thrust, and torque.

FIG. 1

EP 4 461 639 A1

**FIG. 2**

START — 302

FOR GIVEN ALTITUDE AND AIR SPEED CALCULATE ADVANCE, POWER AND TORQUE CONSTRAINTS. — 304

FOR GIVEN ALTITUDE AND AIR SPEED FIND MAXIMUM AVAILABLE THRUST WITHIN CONSTRAINTS — 306

CALCULATE THE REQUIRED THRUST AS THE PRODUCT OF MAXIMAL AVAILABLE THRUST AND THROTTLE SETTING (0 TO 1). — 308

FOR GIVEN ALTITUDE, AIR SPEED, AND REQUIRED THRUST, CALCULATE THE THRUST CONTOUR IN THE ADVANCE - BLADE ANGLE PLANE — 310

FIND THE POINT (BA & J) WITH MAXIMUM EFFICIENCY ON THE THRUST CONTOUR WITHOUT CONSIDERING CONSTRAINTS — 312

CALCULATE THE TORQUE, POWER, AND RPM CORRESPONDING TO OPTIMAL BA & J POINT — 314

316 — ARE CONSTRAINTS VIOLATED? — NO

YES

FIND THE POINT (BA & J) WITH MAXIMUM EFFICIENCY ON THE THRUST CONTOUR WITHIN CONSTRAINTS — 318

CALCULATE THE TORQUE, POWER, AND RPM CORRESPONDING TO NON-OPTIMAL BA & J POINT — 320

NOTIFY THE PILOT — 322

TRANSIT THE OPTIMAL REQUIRED TORQUE TO THE TORQUE FEEDBACK CONTROLLER AND OPTIMAL RPM TO THE RPM FEEDBACK CONTROLLER — 324

*FIG. 3*

START ～402

FOR GIVEN ALTITUDE AND AIR SPEED
CALCULATE ADVANCE, POWER
AND TORQUE CONSTRAINTS. ～404

FOR GIVEN ALTITUDE AND AIR SPEED FIND
MAXIMUM AVAILABLE POWER WITHIN CONSTRAINTS ～406

CALCULATE THE REQUIRED POWER AS
THE PRODUCT OF MAXIMAL AVAILABLE POWER
AND THROTTLE SETTING (0 TO 1). ～408

FOR GIVEN ALTITUDE, AIR SPEED, AND
REQUIRED POWER, CALCULATE THE POWER
CONTOUR IN THE ADVANCE - BLADE ANGLE PLANE ～410

FIND THE POINT (BA & J) WITH MAXIMUM
EFFICIENCY ON THE POWER CONTOUR
WITHOUT CONSIDERING CONSTRAINTS ～412

CALCULATE THE TORQUE AND RPM
CORRESPONDING TO OPTIMAL
BA & J POINT ～414

416～ ARE CONSTRAINTS VIOLATED? NO

YES

FIND THE POINT (BA & J) WITH MAXIMUM
EFFICIENCY ON THE POWER
CONTOUR WITHIN CONSTRAINTS ～418

CALCULATE THE TORQUE
AND RPM CORRESPONDING TO
NON-OPTIMAL BA & J POINT ～420

NOTIFY THE PILOT ～422

TRANSIT THE OPTIMAL REQUIRED TORQUE
TO THE TORQUE FEEDBACK CONTROLLER AND
OPTIMAL BA TO THE BA FEEDBACK CONTROLLER ～424

# FIG. 4

**FIG. 5A**

**FIG. 5B**

**FIG. 5C**

**FIG. 6A**

**FIG. 6B**

Europäisches
Patentamt
European
Patent Office
Office européen
des brevets

# EUROPEAN SEARCH REPORT

Application Number

EP 24 16 9124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S60 76499 A (NIHON KOUKUU UCHIYUU KOUGIYOUK; SUMITOMO PRECISION PROD CO) 30 April 1985 (1985-04-30) * columns 1-18; figures 1-6 * | 1-15 | INV. B64C11/30 |
| X | US 2023/122557 A1 (GRZEDZINSKI KACPER JAKUB [GB]) 20 April 2023 (2023-04-20) * paragraphs [0030] - [0079]; figures 1-7 * | 1-15 | |
| X | WO 2010/064483 A1 (NIPPON YUSEN KK [JP]; MONOHAKOBI TECHNOLOGY INST [JP] ET AL.) 10 June 2010 (2010-06-10) * abstract; figures 1-6 * | 1-15 | |
| X | US 2015/314853 A1 (TANTOT NICOLAS JEROME JEAN [FR] ET AL) 5 November 2015 (2015-11-05) * paragraphs [0025] - [0076]; figures 1-6 * | 1-15 | |
| X | US 5 209 640 A (MORIYA YOSHIHITO [JP]) 11 May 1993 (1993-05-11) * the whole document * | 1-15 | **TECHNICAL FIELDS SEARCHED (IPC)**<br><br>B64C |

The present search report has been drawn up for all claims

| Place of search | Date of completion of the search | Examiner |
|---|---|---|
| Munich | 5 September 2024 | Lambert, Brice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 9124

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | | Publication date | Patent family member(s) | | Publication date |
|---|---|---|---|---|---|
| JP S6076499 | A | 30-04-1985 | JP | H0323399 B2 | 28-03-1991 |
| | | | JP | S6076499 A | 30-04-1985 |
| US 2023122557 | A1 | 20-04-2023 | EP | 4166453 A1 | 19-04-2023 |
| | | | US | 2023122557 A1 | 20-04-2023 |
| WO 2010064483 | A1 | 10-06-2010 | JP | 5042977 B2 | 03-10-2012 |
| | | | JP | 2010132161 A | 17-06-2010 |
| | | | WO | 2010064483 A1 | 10-06-2010 |
| US 2015314853 | A1 | 05-11-2015 | BR | 112015012287 A2 | 11-07-2017 |
| | | | CA | 2892654 A1 | 05-06-2014 |
| | | | CN | 104936859 A | 23-09-2015 |
| | | | EP | 2925602 A1 | 07-10-2015 |
| | | | FR | 2998866 A1 | 06-06-2014 |
| | | | RU | 2015125728 A | 11-01-2017 |
| | | | US | 2015314853 A1 | 05-11-2015 |
| | | | WO | 2014083259 A1 | 05-06-2014 |
| US 5209640 | A | 11-05-1993 | DE | 69025738 T2 | 14-11-1996 |
| | | | EP | 0436231 A2 | 10-07-1991 |
| | | | US | 5209640 A | 11-05-1993 |

EPO FORM P0459

For more details about this annex : see Official Journal of the European Patent Office, No. 12/82

**EP 4 461 639 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8315750 B, Blanke
- US 9180976 B, Kobayashi
- US 20100274420, Veit
- US 20210180525, Meunier